# EUROPEAN PATENT SPECIFICATION

(11) **EP 1 644 842 B1**
(45) Date of publication and mention of the grant of the patent: **17.03.2010**
(21) Application number: 04742179.7
(22) Date of filing: 08.07.2004
(51) Int. Cl.: G06F 15/177, H04L 12/24

(54) **METHOD; SYSTEM; DATA PROCESSING DEVICE AND COMPUTER PROGRAM FOR SPECIFYING NODES IN DEVICE MANAGEMENT SYSTEM**
VERFAHREN, SYSTEM, DATENVERARBEITUNGSEINRICHTUNG UND COMPUTERPROGRAMM ZUM SPEZIFIZIEREN VON KNOTEN IN EINEM EINRICHTUNGS-VERWALTUNGSSYSTEM
PROCEDE, SYSTEME ET DISPOSITIF DE TRAITEMENT DE DONNEES ET PROGRAMME INFORMATIQUE POUR DETERMINER DES NOEUDS DANS UN SYSTEME DE GESTION DE DISPOSITIFS

(30) Priority: 11.07.2003 FI 20031061
(43) Date of publication of application: 12.04.2006
(73) Proprietor: Nokia Corporation, 02150 Espoo (FI)
(72) Inventor: KAAPPA, Eero, FI-33230 Tampere (FI); SAHINOJA, Mikko, FI-33580 Tampere (FI)
(74) Representative: Smolander, Jouni Juhani
(86) International application number: PCT/FI2004/000436
(87) International publication number: WO 2005/006206

(56) References cited:
- WO-A1-02/091756
- WO-A2-01/90883
- US-A- 5 704 041
- US-A1- 2002 087 596
- US-A1- 2003 103 484
- 'SyncML Device Management Tree and Description, version 1.1.1', [Online] 02 October 2002, pages 1 - 48, XP002982290 Retrieved from the Internet: <URL:http://www.syncml.org/docs/syncml_dm_t nd_v111_20021002.pdf> [retrieved on 2004-11-11]

## Description

### FIELD OF THE INVENTION

The invention relates to specifying nodes of a management structure used in device management in a device management system.

### BACKGROUND OF THE INVENTION

The significance of device management is emphasized as the different data processing devices, such as mobile stations, become more complex. Various settings are required in the devices, such as settings associated with Internet access points, which are laborious and difficult to set manually by the user. Device management solutions have been developed for instance to solve this problem, by means of which for instance an administrator of a company's data system or a teleoperator is able to configure a device suitably. Usually device management refers to measures by which parties external to the device are able to change the configuration of the device, for instance change the settings or even some protocol used by the device. Not only settings associated with the device, but also user-specific data, such as user profiles, logos, ringing tunes and menus can be sent, allowing the user to modify the settings of the device into personal or the modification to take place automatically in association with device management.

One device management standard is SyncML device management (Synchronization Markup Language) of the OMA (Open Mobile Alliance), which is partly based on the SyncML protocol. For instance, a PC (Personal Computer) may serve as a device management server and a mobile station as a device management client. The client device acting as client from the point of view of device management sends information about itself to a management server performing device management in a session initiation message, to which the management server responds by sending its own information and server management commands. The client device responds by status information, after which the server can end the session or send more server management commands. If the server sends more management commands, the client device should respond to these by status information. Having received status information, the server is always able to end the session or continue it by sending more device management commands. The device management may also be implemented such that inquiries are first sent to the user about what he wants to update, and information about the user's selections is sent to the server. The server can then send the updates/operations requested by the user in the next packet.

In the client device, the matters to be managed are arranged as management objects. Management objects are entities in the client device and are manageable by the management server's management commands. The management object may be for instance an integer or a large entity, such as a background picture or a screensaver. At least some management objects can be standardized; the SyncML device management standards presently include three standardized management objects.

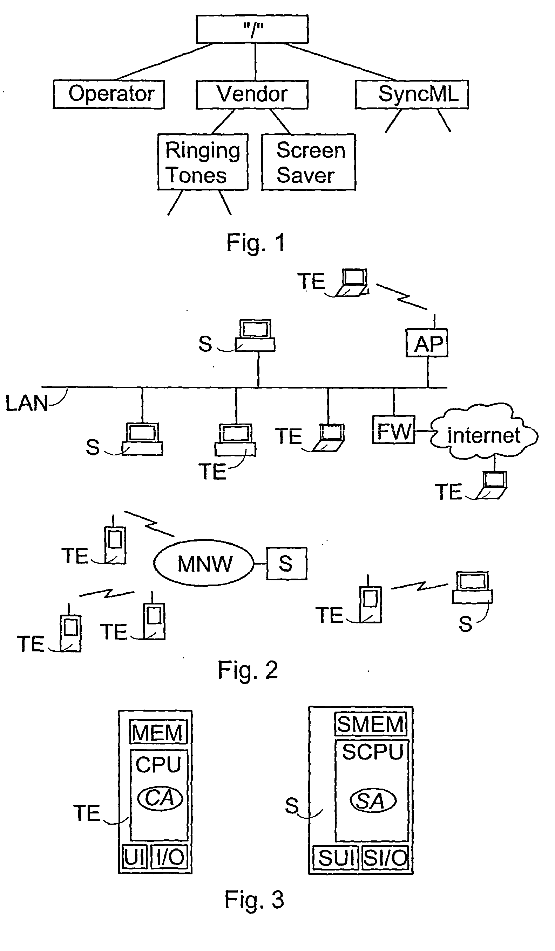

In SyncML device management, management objects are arranged in the form of a tree as a management tree, illustrated in Figure 1. The management tree consists of nodes, and the management object is a subtree of the management tree and can comprise one or more nodes. In the following, nodes that form management objects are discussed. The node may be a single parameter, a subtree or a data collection. For example, the node 'Vendor' is an interior node, since it has child nodes 'Screen Saver' and 'Ringing Tones'. The node 'Screen Saver' is a leaf node, since it has no child nodes. The node 'Ringing Tones' is also an interior node, since it has child nodes. The content of the node may also be a link addressing another node. Each node can be addressed using a URI identifier (Uniform Resource Identifier). The URI of a node is created by starting at the root '/' and, traversing down the tree, each node has a name, which is appended to the previous ones using '/' as the delimiting character. For example, the node 'Ringing Tones' can be addressed using the URI identifier '/Vendor/Ringing Tones/'. The nodes may be permanent or dynamic. Dynamic nodes can be added to the management tree from the client device or the management server.

According to the SyncML DM specification of the OMA "SyncML Device Management Tree and Description", version 1.1.1, 2 October 2002, 48 pages, chapter 8, different device manufacturers can form a device description containing device-specific property information for the management server by using a standardised DTD (Document Type Description) of a device description framework (DDF). The DTD model of the device description defines the XML elements in which the device manufacturer can specify the properties of the device type, thus forming a device description. On the basis of the device description, the management server is able to send management commands to various devices serving as device management clients. The device description can specify particularly the internal software structure of a client device as to the objects to be managed. Property information may include, node-specifically, information whether the device (more specifically, the node to be specified) supports the use of a time stamp (when the node was last changed) or which MIME types the node supports. The description specifies only the element Occurrence, which can define how many times the node occurs in the management tree. With this element, the management tree can be extended in the width direction by adding several parallel nodes, if it is specified in the element Occurrence that the node can occur in the management tree more than once (e.g. the node 'Operator' parallel to the node 'Vendor'). A problem with the device description according to this specification is that it is cumbersome to extend the management tree in the depth direction (e.g. child node 'Screen saver' for the node 'Vendor'), since for each node, all child nodes underlying a node must be predefined in the device description. For this reason, device descriptions may become large. If a node serves as a child node for several nodes, it must be described in the device description of each node, or separate device descriptions must be used.

### BRIEF DESCRIPTION OF THE INVENTION

A method, a device management system, a data processing device, a computer program product and a data structure are provided, which are characterized by what is stated in the independent claims. Some preferred embodiments of the invention are described in the dependent claims.

In accordance with the invention, the device description comprises, for at least one node, recursion information concerning the starting point for recursion, whereby the node is repeated according to the recursion information in the management structure.

The node generally refers to an entity that is associated with device management and can be configured by a third party, e.g. to the settings of an Internet access point, without restriction to the nodes of SyncML device management. Correspondingly, the management structure can be a structure having any shape and containing nodes, without restriction to device management trees of the SyncML device management having the shape of a tree. Node repetition means that a node which is in accordance with the information substantially specified for the node in device description, e.g. in the element Node of the DDF description of the SyncML device management, can be added to several points in the management structure (i.e. in addition to the upper node specified for the node, under at least one node defined in the recursion information); naturally, information to be stored in various nodes can be different. Recursion information refers generally to information of any type, which indicates the repeatability of the node and defines at least the starting point for/of repetition (the starting point can also be defined by the position of the recursion information).

The invention enhances and improves the modelling of devices. The solution of the invention provides the advantage that device descriptions can indicate that nodes can be repeated especially in the depth direction. The device management server can thus repeat nodes which are defined in the recursion information as repeatable nodes, and a corresponding node can be added anywhere in the management structure. Hence, nodes can be specified in a much more versatile manner and not every child object of the node need be specified in the device description. Thus, the size of device descriptions becomes smaller and fewer resources are needed to store and transfer them.

According to an embodiment of the invention, recursion information also comprises information on the number of recursions, whereby the node is repeated in the management structure by restricting the number of recursions as defined by the information on the number of recursions. The number of node repetitions can thus be restricted in the management server.

### BRIEF DESCRIPTION OF THE FIGURES

In the following, preferred embodiments of the invention will be described in greater detail with reference to the accompanying drawings, in which
Figure 1 illustrates a management tree;
Figure 2 illustrates a management system;
Figure 3 illustrates a server and a client device;
Figure 4 illustrates a method according to an embodiment of the invention; and
Figure 5 illustrates how nodes can be repeated in the management tree.

### DETAILED DESCRIPTION OF THE INVENTION

In the following, an embodiment of the invention will be described in a system supporting SyncML device management, but is should be noted, however, that the invention is applicable to any device management system enabling the organization of device management objects also in other ways than as a tree structure.

Figure 2 illustrates a networked system. A network server or PC typically acts as a server S. A TE is typically a mobile phone, a PC, a laptop computer or a PDA device (Personal Digital Assistant). The assumption in the following embodiments is that from the point of view of device management, the terminal TE serves as the client device and the server S as the management server. The server S may manage several client devices TE.

Figure 2 shows two examples, client devices TE and management servers S being connected to a local area network LAN in the first one. The client device TE connected to the network LAN comprises a functionality, e.g. a network card and software controlling data transfer, for communication with the devices of the network LAN. The local area network LAN may be any type of local area network, and the TE may communicate with the server S also via the internet typically using a firewall FW. The terminal TE may be connected to the local area network LAN also wirelessly via an access point AP.

In the second example, the client device TE communicates with the server S via a mobile network MNW. The terminal TE, connected to the network MNW, comprises a mobile station functionality for wireless communication with the network MNW. Other networks may also exist between the mobile network MNW and the server S, such as a local area network LAN. The mobile network MNW may be any known wireless network, e.g. a network supporting the GSM service, a network supporting the GPRS service (General Packet Radio Service), a third generation mobile network, such as a network according to the network specifications of the 3GPP (3^{rd} Generation Partnership Project), a wireless local area network WLAN, a private network or a combination of networks. An important service in the transport layer in several mobile networks is the WAP, the WSP layer (Wireless Session Protocol) comprised by which is used to provide transport service to the device management application layer in the client device TE and the server S. In this case, the system comprises at least one WAP gateway and optionally one or more WAP proxy servers. The WAP also supports other transfer techniques, such as the HTTP or OBEX standards. Lower-level transfer techniques can be used such as circuit or packet-switched data transfer or SMS-based transfer in accordance with the properties of the underlying mobile network MNW. In addition to the preceding examples, other device management configurations are also feasible, such as a management connection between the terminals TE or a direct management connection between the terminal TE and the server S by using a wired or wireless connection without other network elements.

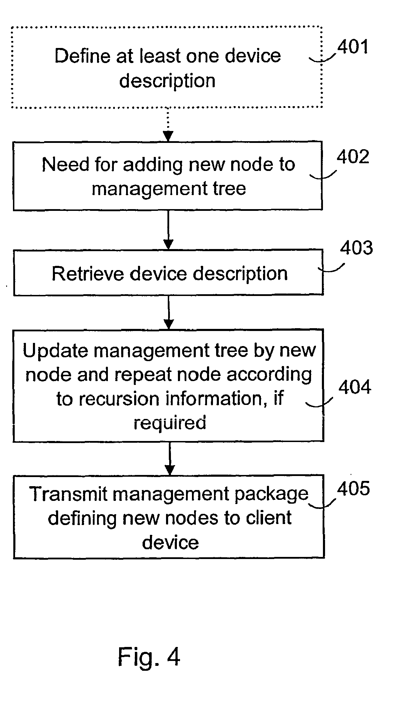

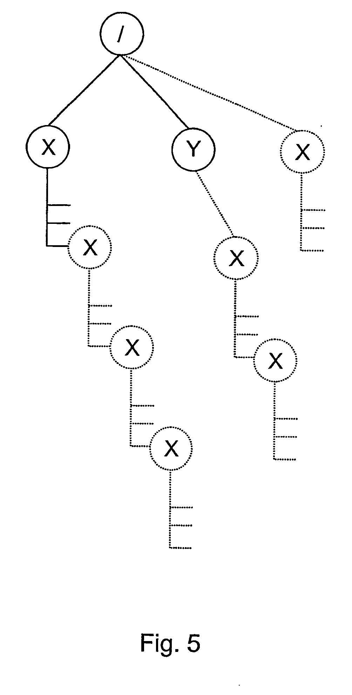

As Figure 3 illustrates, the terminal TE and the server S comprise memory MEM; SMEM, a user interface Ul; SUI, I/O means I/O; SI/O for arranging data transfer, and a central processing unit CPU; SCPU comprising one or more processors. The memory MEM; SMEM includes a non-volatile portion for storing applications controlling the central processing unit CPU; SCPU and other data to be stored, and a volatile portion for use for temporary data processing. In the memory MEM of the TE, management objects are stored, of whose structure a management tree is maintained also in the memory SMEM of the server S. The TE, operating as a client device according to the SyncML device management standard, comprises a client agent CA that attends to functions associated with a management session in the client device. The device S operating as the management server comprises a server agent SA or a server master attending to the management session. The client agent CA can be implemented by executing a computer program code stored in the memory MEM in the CPU and the SA by executing a computer program code stored in the memory SMEM in the SCPU. As was stated before, the TE and the S may operate as the management server and/or the client device. The terminal TE, for instance, may thus at least partly comprise the functions of the server agent SA, allowing it to operate as a management server in the device management between the terminals TE. The computer program codes executed in the central processing unit SCPU can be used to make at least the server S also implement the inventive means associated with the use of device descriptions and the node repetition, some embodiments thereof being illustrated in Figures 4 and 5. The computer program may be stored in any memory means, e.g. a hard disk in a PC or a CD ROM, from where it can be loaded in the memory MEM; SMEM of the executing device TE; S. The computer program may also be loaded via a network by using the TCP/IP protocol stack, for example. It is also possible to use hardware solutions or a combination of hardware and software solutions to implement the inventive means. The data structure containing the device description can be transferred for instance via a data transmission network to the server S and stored in the memory of the server S.

Figure 4 illustrates a method of an embodiment, at least steps 402 to 405 of which are executable in the management server S. One or more device descriptions are predefined 401 for forming new (dynamic) nodes. The device description contains information about the properties of the device in order to arrange the device management and particularly to specify management tree nodes, and thus management objects, for the device. It is to be noted that the device description may only include some of the properties of the device and can specify, for instance, properties of a single software component, which may be common to more than one device.

According to an embodiment, device descriptions are documents based on the XML language. For XML-based documents, a document type definition DTD is specified, which in the XML language specifies the tags used, the structural relations of the elements (!ELEMENT) between the tags, and other usable specifications of the XML documents. As is well known in the XML language, a data element begins with an initial identifier (e.g. <section>) and ends in an end identification (</section>), and it may include text or other elements. The DTD is present in all documents sent or a reference is made therein to a known DTD. In accordance with an embodiment, a device description is specified on the basis of the DTD model of the device description defined in the SyncML device management specification. The DTD model and the device description formed by using the DTD model specify particularly elements for identifying the device manufacturer and the device type as well as properties of the nodes that can be specified for the device. Node-specific information specifies, for instance, the name of the node, a path to the node, run-time properties of the node and stable node information for the management server. In addition to the above description, the invention is also applicable to other types of device descriptions, for instance other description frameworks can be used, such as RDF (Resource Description Framework), CC/PP (Composite Capability/Preference Profiles), CIM (Common Information Model), GUP (Generic User Profile), XML Schema and UML (Unified Modelling Language).

Device descriptions are typically formed for each device type specifically, and they can be defined 401 by the manufacturer already during manufacture. After the device description is defined, it can be stored in the memory SMEM of the device management server S, for example. According to an embodiment, the device description can also be created or modified 401 in the terminal TE. For instance, when a software update is performed in the terminal TE or a new software component is added thereto, also the device description can be defined 401 in the terminal TE and stored in the memory MEM of at least the TE.

According to an embodiment of the invention, in the device description recursion information, i.e. information about the repeatability of the node, is specified for at least one node. In this case, the DTD of the device description document can comprise one or more elements or fields for defining at least the starting point for recursion. Other recursion information can also be defined in the DTD of the device description documents and thus in the device description documents. Different embodiments of defining recursion information in the device description documents are illustrated in more detail later.

Device descriptions must be available to the management server for device management. When nodes are to be specified 402 for the device to be managed, i.e. at least when new nodes are to be formed or the existing nodes are to be modified, the server retrieves 403 the device description on the basis of a device identifier, such as a manufacturer identifier and a device type identifier. Device descriptions can be maintained in the memory SMEM of the server S, or the server S can retrieve the device description from an external device, e.g. over the Internet from a server maintained by the device manufacturer. According to an embodiment, the device description can also be obtained from the terminal TE by requesting it in the beginning of the device management session, for instance.

In step 404, the content of one or more nodes to be added to the management tree or of at least one node to be modified is defined by processing the data structure including the device description. The new node can be of any object type, such as an internal node or a leaf node.

According to an embodiment, the new node or the node to be modified is repeated 404 in the management tree. In this case the node, which is defined as a repeatable node in the device description, can be repeated in the management tree. According to an embodiment, recursion information which contains at least the information on the starting point for recursion is specified for the repeatable node in the device description. The node can thus be repeated at the starting point defined in the recursion information, possibly considering other settings defined in the recursion information, such as the number of repetitions. Any child node of the node in question can be defined as the starting point, which means that the node can be repeated in the depth direction in the management tree. Some other node in the management tree, which may also be defined in some other device description, can also be defined as the starting point. In this embodiment, the node can be repeated anywhere in the management tree. On the basis of the recursion information, the management server S knows which nodes can be repeated and where these nodes can be repeated.

Figure 5 illustrates by way of example various possibilities of repetition, the repetitions being marked with a broken line. According to an embodiment, the recursion information is defined in the information of the node which can be repeated in the management tree. In the information of node X, the recursion information is defined in such a manner that node X can be repeated under the child element of node X, under node Y and under root /. By using the recursion information, the node description (for node X) that was defined eariier can be utilised in various ways in the device description, and thus each internal node and leaf node need not be described separately for each branch. According to an embodiment, the recursion information can specify several starting points at which the node can be repeated or where it should be repeated. The management server S may automatically repeat the node when the recursion information is specified for it. The management server S may repeat the node comprising the recursion information each time the management information defined in the node must be added to at least two locations in the management tree.

According to an alternative embodiment, the recursion information is defined in the information of the node under which the repeatable node is repeated. In this case, the starting point for recursion is implicitly defined on the basis of the location where the recursion information is defined. Thus, the recursion information also comprises the identifier or address of the repeatable node, on the basis of which the repeatable node is achieved. The repeatable node can be any node of the same or different device description. With reference to Figure 5, the information of node Y can specify the recursion information (whereby node Y is defined as the starting point for recursion, unless some other node is defined as the starting point), which includes a reference to node X, such as the URI identifier of node X. On the basis of the recursion information, node X can be repeated under node Y.

Again, with reference to Figure 4, the management server S can transmit 405 a management package containing the new nodes to the client device TE. The management package may comprise an ADD command for the new nodes, whereby the TE adds the information specified in the nodes in is memory and updates the management tree. In step 405, mechanisms of the device management protocol and messages specified for it can be utilized, as to a more detailed description of the SyncML device management protocol, a reference is made to the OMA specification "SyncML Device Management Protocol", version 1.1.1, 2 October 2002, 39 pages. As to other details associated with the use of nodes and a management tree according to the SyncML device management, a reference is made to the OMA specification "SyncML Device Management Tree and Description", version 1.1.1, 2 October 2002, 48 pages.

According to an example, a bookmark node specified in the device description for bookmarks is repeated. Since the bookmarks typically form folder structures, a bookmark node can be repeated on the basis of the recursion information for a bookmark node in the device description and thus the folder structures can be added for the bookmarks as child nodes and/or leaves of the management tree.

According to another example, nodes specified for software management can be repeated in the management tree. Folder structures can easily be specified for software by using only one node description comprising the recursion information in the device description. It is often necessary that, e.g. for reasons of information security, several long directory paths must be created for software, and repeating of nodes according to an embodiment of the invention on the basis of the recursion information of the device description is especially useful when directories of this type are created.

According to an embodiment, the recursion information also comprises information on the number of recursions. In this case, the management server S is arranged to repeat the node 404 in the management tree by restricting the number of repetitions according to the information on the number of recursions. The information on the number of recursions can, for instance, define the maximum number of repetitions, not allowing the management server to repeat the node more than the maximum number of times in the management tree. The information on the number of recursions can also specify that the number of repetitions should be, for instance, zero or more, at least one, n, zero to n, one to n, zero to ∞, or n to ∞. In this embodiment, the number of node repetitions in the management tree can be restricted device-specifically.

The number of repetitions can be set to be the same for all repeatable nodes. Nodes can thus be repeated in any management tree. Another alternative is that the client device (TE) limits the number or repetitions, i.e. does not add the repeatable nodes the number of which exceeds the maximum number to the management tree.

According to an embodiment, the recursion information also comprises information on the end point for recursion. The repetition of the node in the management tree is thus ended in step 404 at the end point. The recursion information may specify, for instance, that the end point for recursion is one of the node's child nodes after which the nodes specified in the node description will no longer be repeated (in the node to be added to the starting point). By means of this embodiment it is possible to define that only a part of the node should be repeated.

According to an embodiment, the recursion information also comprises name information or a recursion identifier of another type. In this way, different types of recursion information can be named and distinguished from each other easily. In this embodiment, a name can be specified for a repeatable node in the device description, which name can be different from that of the node according to whose specifications the repeatable node is formed. According to an alternative embodiment, the name information can identify the repeatable node.

It is to be noted that the above embodiments can also be applied as a combination thereof. The recursion information can be specified in at least one element which is specified for the device description document. According to an embodiment, this information is specified in the run-time properties of the node, i.e. in the node-specific element RTProperties of the device description of the SyncML device management. According to a further embodiment, the recursion information is specified in the element Type specifying whether the node in question supports the use of the property Type. The starting point for recursion, but also other above-mentioned information, such as information on the number of repetitions, can be specified as values in the element Type. In the device description, e.g. the URI identifier and the information on the number of repetitions, separated from the URI identifier by semi-colon, can be specified in the element Type. In the internal nodes and leaf nodes, the element Type may include different information. Since, according to an embodiment, the location of the recursion information can indicate the starting point for recursion, the element Type may only comprise an indication about the recursion and the identifier of the repeatable node. The element Type may also include other information, such as scripts or command lines.

According to an embodiment, the device description comprises at least one new element for specifying recursion information. This information can be defined, for instance, in a property element DFProperties specifying static information of the node. The element DFProperties of the DTD, containing the above recursion information, is described below by way of example.
<!ELEMENT DFProperties (AccessType, DefaultValue?, Description?, DFFormat, Occurrence?, Scope?, DFTitle?, DFType, RecName, R-tag, Start Point, End Point)>

The elements Start Point for specifying the starting point for recursion, RecName for specifying the name of the recursion, R-tag for specifying the number of repetitions and End Point for specifying the end point for repetitions have thus been added to the DTD. In the device description document, the specifications according to which the node can be repeated 404 in the management tree can thus be specified in step 401 in these recursion elements for the nodes repeatable in the management tree.

As illustrated below, according to another example a new recursion element (RecProperties) is specified for the element DFProperties of the DTD, and at least part of the above recursion information is specified as subelements or values of this recursion element.
<!ELEMENT DFProperties (AccessType, DefaultValue?, Description?, DFFormat, Occurrence?, Scope?, DFTitle?, DFType, RecProperties)>

It is to be noted that it is not necessary to specify all recursion information described above in the DTD or device description for repeating the nodes.

It is obvious to a person skilled in the art that as technology advances, the basic idea of the invention can be implemented in various ways. The invention and its embodiments are thus not restricted to the above examples but may be modified within the scope of the claims.

## Claims

1. A method of specifying nodes of a management structure used for device management in a device management system, wherein properties of at least one node are specified in a device description for a management structure formed for at least one device to be managed and wherein the nodes are specified (404) in the management structure on the basis of information included in the device description,
**characterized in that**
the device description comprises, for at least one node, recursion information indicating repeatability of the node and concerning at least the starting point for recursion at which the node can be repeated, whereby
the node is repeated (404) according to the recursion information in the management structure.

2. A method as claimed in claim 1, **characterized in that** the recursion information also comprises information on the number of recursions, whereby
the node is repeated in the management structure by restricting the number of recursions according to the information on the number of recursions.

3. A method as claimed in claim 1 or 2, **characterized in that** the recursion information also comprises information on the end point for recursion, whereby the repetition of the node in the management structure is ended at the end point.

4. A method as claimed in any one of the preceding claims, **characterized in that**
the recursion information is defined in the information of the node which can be repeated in the management structure, whereby
said node is repeated in the management structure at the starting point for recursion.

5. A method as claimed in any of claims 1 to 3, **characterized in that**
the recursion information is defined in the information of the node under which the repeatable node is repeated, whereby the recursion information also comprises the identifier or address of the repeatable node.

6. A method as claimed in any one of the preceding claims, **characterized in that** the recursion information also comprises name information.

7. A method as claimed in any one of the preceding claims, **characterized in that**
the device description is a document based on the XML language, whereby
the device description is formed on the basis of a DTD description comprising at least one element for defining said recursion information.

8. A method as claimed in claim 7, **characterized in that**
the device description comprises separate elements for defining said recursion information.

9. A method as claimed in any one of the preceding claims, **characterized in that**
the node is repeated according to the recursion information in the management structure in response to the need for forming the node defined in the device description.

10. A method as claimed in any one of the preceding claims, **characterized in that**
the method is carried out in a device management server according to the SyncML device management standard for specifying nodes of a SyncML device management tree, the device management server being arranged to maintain the device description and/or obtain the device description in response to the need for forming device management commands to the client device.

11. A data processing device arranged to operate as a management server for device management and to specify nodes in a management structure maintained for at least one device management client to be managed on the basis of a device description comprising properties of at least one node, **characterized in that**
the data processing device is arranged to receive (403) at least one device description comprising, for at least one node, recursion information indicating repeatability of the node and concerning at least the starting point for recursion at which the node can be repeated, and
the data processing device is arranged to repeat (404) the node according to the recursion information in the management structure.

12. A data processing device as claimed in claim 11, **characterized in that**
the recursion information is defined in the information of the node which can be repeated in the management structure, whereby
the data processing device is arranged to repeat said node in the management structure at the starting point for recursion.

13. A data processing device as claimed in claim 11, **characterized in that**
the recursion information is defined in the information of the node under which the repeatable node is repeated, whereby the recursion information also comprises the identifier or address of the repeatable node, and whereby the data processing device is arranged to repeat the repeatable node in the node in which the recursion information is defined.

14. A computer program product loadable in the memory of a data processing device, **characterized in that** said computer program product comprises a computer program code which, when executed in the processor of the data processing device maintaining a management structure on the basis of a device description comprising properties of at least one node, causes the data processing device to
receive (403) at least one device description comprising, for at least one node, recursion information indicating repeatability of the node and concerning at least the starting point for recursion at which the node can be repeated, and
repeat (404) the node according to the recursion information in the management structure.

15. A data processing device readable data structure for controlling the data processing device maintaining a management structure on the basis of a device description comprising properties of at least one node, **characterized in that** the data structure comprises, for at least one node, recursion information indicating repeatability of the node and concerning at least the starting point for recursion at which the node can be repeated, the data structure causing the data processing device to repeat (404) the node according to the recursion information in the management structure.

16. A device management system, **characterized in that** the device management system comprises a data processing device according to claim 11.

## Patentansprüche

1. Verfahren zum Spezifizieren von Knoten einer für eine Einrichtungsverwaltung verwendeten Verwaltungsstruktur in einem Einrichtungsverwaltungssystem, wobei Eigenschaften von zumindest einem Knoten in einer Einrichtungsbeschreibung spezifiziert werden für eine für zumindest eine zu verwaltende Einrichtung gebildete Verwaltungsstruktur und wobei die Knoten in der Verwaltungsstruktur auf Grundlage der in der Einrichtungsbeschreibung enthaltenen Information spezifiziert werden (404),
**dadurch gekennzeichnet, dass**
die Einrichtungsbeschreibung für zumindest einen Knoten eine Rekursionsinformation umfasst, die eine Wiederholbarkeit des Knotens angibt und zumindest den Rekursionsstartpunkt betrifft, an dem der Knoten wiederholt werden kann, wobei
der Knoten entsprechend der Rekursionsinformation in der Verwaltungsstruktur wiederholt wird (404).

2. Verfahren nach Anspruch 1, **dadurch gekennzeichnet, dass** die Rekursionsinformation auch eine Information über die Anzahl von Rekursionen umfasst, wobei
der Knoten in der Verwaltungsstruktur durch Begrenzen der Zahl von Rekursionen entsprechend der Information über die Zahl der Rekursionen wiederholt wird.

3. Verfahren nach Anspruch 1 oder 2, **dadurch gekennzeichnet, dass** die Rekursionsinformation auch eine Information über den Endpunkt für die Rekursion umfasst, wobei die Wiederholung des Knotens in der Verwaltungsstruktur an dem Endpunkt beendet wird.

4. Verfahren nach einem der vorhergehenden Ansprüche, **dadurch gekennzeichnet, dass**
die Rekursionsinformation in der Information des Knotens, der in der Verwaltungsstruktur wiederholt werden kann, definiert ist, wobei
der Knoten in der Verwaltungsstruktur an dem Startpunkt für die Rekursion wiederholt wird.

5. Verfahren nach einem der Ansprüche 1 bis 3, **dadurch gekennzeichnet, dass**
die Rekursionsinformation in der Information des Knotens, unter dem der wiederholbare Knoten wiederholt wird, definiert ist, wobei die Rekursionsinformation auch den Identifikator oder die Adresse des wiederholbaren Knotens umfasst.

6. Verfahren nach einem der vorhergehenden Ansprüche, **dadurch gekennzeichnet, dass** die Rekursionsinformation auch eine Namensinformation umfasst.

7. Verfahren nach einem der vorhergehenden Ansprüche, **dadurch gekennzeichnet, dass**
die Einrichtungsbeschreibung ein Dokument basierend auf der XML-Sprache ist, wobei
die Einrichtungsbeschreibung auf Grundlage einer DTD-Beschreibung gebildet wird, die zumindest ein Element zum Definieren der Rekursionsinformation umfasst.

8. Verfahren nach Anspruch 7, **dadurch gekennzeichnet, dass**
die Einrichtungsbeschreibung getrennte Elemente zum Definieren der Rekursionsinformation umfasst.

9. Verfahren nach einem der vorhergehenden Ansprüche, **dadurch gekennzeichnet, dass**
der Knoten entsprechend der Rekursionsinformation in der Verwaltungsstruktur im Ansprechen des Erfordernis zum Bilden des in der Einrichtungsbeschreibung definierten Knotens wiederholt wird.

10. Verfahren nach einem der vorhergehenden Ansprüche, **dadurch gekennzeichnet, dass**
das Verfahren in einem Einrichtungsverwaltungsserver entsprechend dem SyncML-Einrichtungsverwaltungsstandard zum Spezifizieren von Knoten eines SyncML-Einrichtungsverwaltungsbaums ausgeführt wird, wobei der Einrichtungsverwaltungsserver ausgestaltet ist zum Beibehalten der Einrichtungsbeschreibung und/oder Gewinnen der Einrichtungsbeschreibung im Ansprechen auf das Erfordernis zum Bilden von Einrichtungsverwaltungsbefehlen an die Klienteneinrichtung.

11. Datenverarbeitungsvorrichtung ausgestaltet zum Betrieb als ein Verwaltungsserver für eine Einrichtungsverwaltung und zum Spezifizieren von Knoten in einer für zumindest einen auf Grundlage einer Einrichtungsbeschreibung mit Eigenschaften von zumindest einem Knoten zu verwaltenden Einrichtungsverwaltungsklienten aufrechterhaltenen Verwaltungsstruktur, **dadurch gekennzeichnet, dass**
die Datenverarbeitungsvorrichtung ausgestaltet ist zum Empfangen (403) von zumindest einer Einrichtungsbeschreibung mit einer Rekursionsinformation für zumindest einen Knoten, die eine Wiederholbarkeit des Knotens angibt und zumindest den Rekursionsstartpunkt betrifft, an dem der Knoten wiederholt werden kann, und
die Datenverarbeitungsvorrichtung ausgestaltet ist zum Wiederholen (404) des Knotens entsprechend der Rekursionsinformation in der Verwaltungsstruktur.

12. Datenverarbeitungsvorrichtung nach Anspruch 11, **dadurch gekennzeichnet, dass**
die Rekursionsinformation in der Information des Knotens, der in der Verwaltungsstruktur wiederholt werden kann, definiert ist, wobei
die Datenverarbeitungsvorrichtung ausgestaltet ist zum Wiederholen des Knotens in der Verwaltungsstruktur an dem Rekursionsstartpunkt.

13. Datenverarbeitungsvorrichtung nach Anspruch 11, **dadurch gekennzeichnet, dass**
die Rekursionsinformation in der Information des Knotens, unter dem der wiederholbare Knoten wiederholt wird, definiert ist, wobei die Rekursionsinformation auch den Identifikator oder die Adresse des wiederholbaren Knotens umfasst, und wobei die Datenverarbeitungsvorrichtung ausgestaltet ist zum Wiederholen des wiederholbaren Knotens in dem Knoten, in dem die Rekursionsinformation definiert ist.

14. Computerprogrammprodukt, das in den Speicher einer Datenverarbeitungsvorrichtung ladbar ist, **dadurch gekennzeichnet, dass** das Computerprogrammprodukt einen Computerprogrammcode umfasst, der bei seiner Ausführung in dem Prozessor der eine Verwaltungsstruktur auf Grundlage einer Einrichtungsbeschreibung mit Eigenschaften von zumindest einem Knoten aufrechterhaltenden Datenverarbeitungsvorrichtung die Datenverarbeitungsvorrichtung veranlasst zum
Empfangen (403) von zumindest einer Einrichtungsbeschreibung mit einer Rekursionsinformation für zumindest einen Knoten, die eine Wiederholbarkeit des Knotens angibt und zumindest den Rekursionsstartpunkt betrifft, an dem der Knoten wiederholt werden kann, und
Wiederholen (404) des Knotens entsprechend der Rekursionsinformation in der Verwaltungsstruktur.

15. Eine von einer Datenverarbeitungsvorrichtung lesbare Datenstruktur zum Steuern der Datenverarbeitungsvorrichtung zum Aufrechterhalten einer Verwaltungsstruktur auf Grundlage einer Einrichtungsbeschreibung mit Eigenschaften von zumindest einem Knoten, **dadurch gekennzeichnet, dass** die Datenstruktur für zumindest einen Knoten eine Rekursionsinformation umfasst, die eine Wiederholbarkeit des Knotens angibt und zumindest den Rekursionsstartpunkt betrifft, an dem der Knoten wiederholt werden kann, wobei die Datenstruktur die Verarbeitungsvorrichtung veranlasst zum Wiederholen (404) des Knotens entsprechend der Rekursionsinformation in der Verwaltungsstruktur.

16. Vorrichtungsverwaltungssystem, **dadurch gekennzeichnet, dass** das Vorrichtungsverwaltungssystem eine Datenverarbeitungsvorrichtung nach Anspruch 11 umfasst.

## Revendications

1. Procédé pour spécifier des noeuds d'une structure de gestion utilisée pour une gestion de dispositif dans un système de gestion de dispositif, dans lequel des propriétés d'au moins un noeud sont spécifiées dans une description de dispositif pour une structure de gestion formée pour au moins un dispositif à gérer et dans lequel les noeuds sont spécifiés (404) dans la structure de gestion sur la base d'informations incluses dans la description de dispositif,
**caractérisé en ce que**
la description de dispositif comprend, pour au moins un noeud, des informations de répétition récursive indiquant la répétitivité du noeud et concernant au moins le point de début de répétition récursive auquel le noeud peut être répété, de telle manière que
le noeud est répété (404) en fonction des informations de répétition récursive dans la structure de gestion.

2. Procédé selon la revendication 1, **caractérisé en ce que** les informations de répétition récursive comprennent également des informations sur le nombre de répétitions récursives, de telle manière que
le noeud est répété dans la structure de gestion en limitant le nombre de répétitions récursives en fonction des informations sur le nombre de répétitions récursives.

3. Procédé selon la revendication 1 ou 2, **caractérisé en ce que** les informations de répétition récursive comprennent également des informations sur le point de fin de répétition récursive, de telle manière que la répétition récursive du noeud dans la structure de gestion se termine au point de fin.

4. Procédé selon l'une quelconque des revendications précédentes, **caractérisé en ce que**
les informations de répétition récursive sont définies dans les informations du noeud qui peut être répété dans la structure de gestion, de telle manière que
ledit noeud est répété dans la structure de gestion au point de début de répétition récursive.

5. Procédé selon l'une quelconque des revendications 1 à 3, **caractérisé en ce que**
les informations de répétition récursive sont définies dans les informations du noeud en fonction desquelles le noeud répétitif est répété, de telle manière que les informations de répétition récursive comprennent également l'identifiant ou l'adresse du noeud répétitif.

6. Procédé selon l'une quelconque des revendications précédentes, **caractérisé en ce que** les informations de répétition récursive comprennent également des informations de nom.

7. Procédé selon l'une quelconque des revendications précédentes, **caractérisé en ce que**
la description de dispositif est un document basé sur le langage XML, de telle manière que
la description de dispositif est formée sur la base d'une description DTD comprenant au moins un élément pour définir lesdites informations de répétition récursive.

8. Procédé selon la revendication 7, **caractérisé en ce que**
la description de dispositif comprend des éléments distincts pour définir lesdites informations de répétition récursive.

9. Procédé selon l'une quelconque des revendications précédentes, **caractérisé en ce que**
le noeud est répété en fonction des informations de répétition récursive dans la structure de gestion en réponse au besoin de former le noeud défini dans la description de dispositif.

10. Procédé selon l'une quelconque des revendications précédentes, **caractérisé en ce que**
le procédé est effectué dans un serveur de gestion de dispositif selon la norme de gestion de dispositif SyncML pour spécifier des noeuds d'une arborescence de gestion de dispositif SyncML, le serveur de gestion de dispositif étant agencé pour maintenir la description de dispositif et/ou obtenir la description de dispositif en réponse au besoin de former des commandes de gestion de dispositif sur le dispositif client.

11. Dispositif de traitement de données agencé pour fonctionner en tant que serveur de gestion pour une gestion de dispositif et pour spécifier des noeuds dans une structure de gestion maintenue pour au moins un client de gestion de dispositif à gérer sur la base d'une description de dispositif comprenant des propriétés d'au moins un noeud,
**caractérisé en ce que**
le dispositif de traitement de données est agencé pour recevoir (403) au moins une description de dispositif comprenant, pour au moins un noeud, des informations de répétition récursive indiquant la répétitivité du noeud et concernant au moins le point de début de répétition récursive auquel le noeud peut être répété, et
le dispositif de traitement de données est agencé pour répéter (404) le noeud en fonction des informations de répétition récursive dans la structure de gestion.

12. Dispositif de traitement de données selon la revendication 11, **caractérisé en ce que**
les informations de répétition récursive sont définies dans les informations du noeud qui peuvent être répétées dans la structure de gestion, de telle manière que
le dispositif de traitement de données est agencé pour répéter ledit noeud dans la structure de gestion au point de début de répétition récursive.

13. Dispositif de traitement de données selon la revendication 11, **caractérisé en ce que**
les informations de répétition récursive sont définies dans les informations du noeud en fonction desquelles le noeud répétitif est répété, de telle manière que les informations de répétition récursive comprennent également l'identifiant ou l'adresse du noeud répétitif, et de telle manière que le dispositif de traitement de données est agencé pour répéter le noeud répétitif dans le noeud dans lequel les informations de répétition récursive sont définies.

14. Produit de programme informatique pouvant être chargé dans la mémoire d'un dispositif de traitement de données, **caractérisé en ce que** ledit produit de programme informatique comprend un code de programme informatique qui, lorsqu'il est exécuté dans le processeur du dispositif de traitement de données maintenant une structure de gestion sur la base d'une description de dispositif comprenant des propriétés d'au moins un noeud, amène le dispositif de traitement de données à :
recevoir (403) au moins une description de dispositif comprenant, pour au moins un noeud, des informations de répétition récursive indiquant la répétitivité du noeud et concernant au moins le point de début de répétition récursive auquel le noeud peut être répété, et
répéter (404) le noeud en fonction des informations de répétition récursive dans la structure de gestion.

15. Structure de données lisibles par dispositif de traitement de données pour commander le dispositif de traitement de données maintenant une structure de gestion sur la base d'une description de dispositif comprenant des propriétés d'au moins un noeud, **caractérisée en ce que** la structure de données comprend, pour au moins un noeud, des informations de répétition récursive indiquant la répétitivité du noeud et concernant au moins le point de début de répétition récursive auquel le noeud peut être répété, la structure de données amenant le dispositif de traitement de données à répéter (404) le noeud en fonction des informations de répétition récursive dans la structure de gestion.

16. Système de gestion de dispositif, **caractérisé en ce que** le système de gestion de dispositif comprend un dispositif de traitement de données selon la revendication 11.
